# EUROPÄISCHE PATENTSCHRIFT

(11) **EP 0 739 071 B1**
(45) Veröffentlichungstag und Bekanntmachung des Hinweises auf die Patenterteilung: **14.01.1998**
(21) Anmeldenummer: 96250087.2
(22) Anmeldetag: 17.04.1996
(51) Int. Cl.: H02G 5/06

(54) **Hochspannungs-Rohrgasleiter**
Gas-insulated high voltage line
Ligne haute tension à isolation gazeuse

(30) Priorität: 21.04.1995 DE 19515308
(43) Veröffentlichungstag der Anmeldung: 23.10.1996
(73) Patentinhaber: SIEMENS AKTIENGESELLSCHAFT, 80333 München (DE)
(72) Erfinder: Kelch, Thomas, 13465 Berlin (DE)

(56) Entgegenhaltungen:
- EP-A- 0 409 250
- DE-A- 2 003 724
- DE-A- 2 160 848
- LU-A- 65 685
- US-A- 4 364 171

## Beschreibung

Die Erfindung bezieht sich auf einen Hochspannungs-Rohrgasleiter mit einem Kapselungsrohr und einem in diesem koaxial verlaufenden, mittels Isolierstützern abgestützten Hochspannungsleiter, wobei die Mittelachse des Hochspannungsleiters jeweils im Bereich eines Isolierstützers oberhalb der Mittelachse des Kapselungsrohres angeordnet ist.

Ein Hochspannungs-Rohrgasleiter ist beispielsweise aus der US-PS 4,364,171 bekannt.

Bei einem derartigen Hochspannungs-Rohrgasleiter wird versucht, das Kapselungsrohr mit möglichst geringem Durchmesser zu bauen, um durch Materialersparnis Kosten zu sparen und um den Platzbedarf des Hochspannungs-Rohrgasleiters zu verringern. Dabei muß jedoch die dielektrische Festigkeit zwischen dem Hochspannungsleiter und dem Kapselungsrohr gewahrt bleiben. Üblicherweise ist das Kapselungsrohr mit einem Isoliergas, beispielsweise Schwefelhexafluorid gefüllt.

Aus der DE-OS 21 60 848 ist ein Rohrgasleiter bekannt, bei dem ein Hochspannungsleiter in einem Kapselungsrohr oberhalb dessen Mittelachse angeordnet ist. Hierdurch sollen bei Auftreten von Stromkräften die Isolierstützer nur auf Druck und nicht auf Zug beansprucht werden. Dies erfordert eine Bemessung des Kapselungsrohres, die zwischen dem Hochspannungsleiter und dem oberen Teil des Kapselungsrohres eine genügende dielektrische Sicherheit gewährleistet.

Ein Umstand, der eine optimale Gestaltung der Größenverhältnisse des Kapselungsrohres erschwert, ist die Tatsache, daß der Hochspannungsleiter, der entlang seines Verlaufs in bestimmten Abständen durch Isolierstützer abgestützt ist, zwischen diesen Stützstellen durchhängt. Es muß dabei auch an den Stellen des größten Durchhangs gewährleistet bleiben, daß die für die Sicherheit mindestens erforderliche Distanz zwischen dem Hochspannungsleiter und dem Kapselungsrohr erhalten bleibt.

Der vorliegenden Erfindung liegt die Aufgabe zugrunde, einen Hochspannungs-Rohrgasleiter der eingangs genannten Art so auszubilden, daß der Durchmesser des Kapselungsrohres minimiert werden kann, ohne die dielektrische Sicherheit zu gefährden.

Die Aufgabe wird erfindungsgemäß dadurch gelöst, daß die Mittelachse des Hochspannungsleiters im Bereich eines Isolierstützers jeweils um einen Betrag oberhalb der Mittelachse des Kapselungsrohres angeordnet ist, der etwa der Hälfte des maximalen Durchhanges des Hochspannungsleiters in horizontaler Lage des Hochspannungs-Rohrgasleiters entspricht.

Unter dem maximalen Durchhang wird in diesem Zusammenhang der Abstand zwischen der höchsten und der niedrigsten Position der Mittelachse des Hochspannungsleiters verstanden.

Gemäß dem Stand der Technik wurde der Hochspannungsleiter bisher durch die Isolierstützer genau konzentrisch zu dem Kapselungsrohr befestigt. Dies führt dazu, daß jeweils zwischen zwei Isolierstützern ein Durchhang des Hochspannungsleiters auftritt, so daß der Hochspannungsleiter an der Stelle des größten Durchhangs der Innenwand des Kapselungsrohres am nächsten kommt.

Gemäß der Erfindung wird der Hochspannungsleiter im Bereich der Isolierstützer oberhalb der Mittelachse des Kapselungsrohres angeordnet, wodurch sich auch die Position des Hochspannungsleiters an den Stellen des größten Durchhangs nach oben und damit von der Innenwand des Kapselungsrohres weg verschiebt. Somit sind die Stellen des größten Durchhangs des Hochspannungsleiters dielektrisch sicherer gestaltet.

Der Hochspannungsleiter darf selbstverständlich im Bereich der Isolierstützer nicht soweit oberhalb der Mittelachse des Kapselungsrohres angeordnet werden, daß er in diesem Bereich dem oberen Teil der Innenwand des Kapselungsrohres zu nahe kommt.

Durch diese Gestaltung ist die Abweichung des Hochspannungsleiters von der Mittelachse des Kapselungsrohres nach oben im Bereich der Isolierstützer und nach unten jeweils im Bereich des größten Durchhangs zwischen zwei Isolierstützern gleichmäßig verteilt. Die verschiedenen Längsabschnitte des Hochspannungsleiters sind somit teilweise unterhalb, teilweise oberhalb der Mittelachse des Kapselungsrohres angeordnet. Auf diese Weise kann der Durchmesser des Kapselungsrohres besonders klein gewählt werden bzw. können die Isolierstützer in besonders großem Abstand voneinander positioniert werden.

Der Hochspannungsleiter kann auch gegenüber dieser Gestaltung noch etwas nach oben versetzt sein, so daß er im Bereich der Abstützungen dem Kapselungsrohr näher kommt als in den Bereichen des größten Durchhanges, da im Bereich der Abstützungen die zu berücksichtigenden Fertigungstoleranzen geringer sind als im Bereich des größten Durchhanges.

Durch diese Gestaltung wird einerseits ermöglicht, daß das Kapselungsrohr einen geringeren Durchmesser als bisher aufweisen kann oder es wird bei gleichbleibenden Durchmesser des Kapselungsrohres ein größerer Durchhang und damit ein größerer möglicher Abstand zwischen jeweils zwei Isolierstützern zulässig.

Dadurch wird die Zahl der benötigten Isolierstützer verringert und es ergibt sich eine entsprechende Kostenersparnis.

Unter dem maximalen Durchhang wird in diesem Zusammenhang der Abstand zwischen der höchsten und der niedrigsten Position der Mittelachse des Hochspannungsleiters verstanden.

Eine weitere vorteilhafte Ausgestaltung der Erfindung sieht vor, daß die Isolierstützer als Säulenstützer ausgebildet sind.

Diese Ausgestaltung bringt gegenüber scheibenförmigen oder trichterförmigen Stützern den Vorteil einer Materialersparnis und einer einfacheren Montage. Dabei kann vorgesehen sein, daß im Bereich einer Stützstelle nur ein einziger Säulenstützer vorhanden ist und daß die verschiedenen Säulenstützer im Querschnitt des Kapselungsrohres unterschiedliche Winkel mit der vertikalen Richtung einschließen.

Da der Hochspannungsleiter im wesentlichen nur einer Belastung durch sein eigenes Gewicht ausgesetzt ist, kann vorteilhaft vorgesehen sein, daß er im wesentlichen in vertikaler Richtung abgestützt ist.

Dadurch können Stützer zur Abstützung in horizontaler Richtung eingespart werden.

Eine weitere vorteilhafte Ausgestaltung der Erfindung sieht vor, daß der Hochspannungsleiter durch Säulenstützer abgestützt ist, deren Längsachsen in der Querschnittsebene des Kapselungsrohrs abwechselnd um einen Winkel α oder -α gegen die Vertikale gedreht angeordnet sind, wobei der Betrag des Winkels α kleiner als 90° ist.

Durch diese Ausgestaltung stützen die Säulenstützer den Hochspannungsleiter sowohl in vertikaler als auch in horizontaler Richtung, wobei einerseits vorgesehen sein kann, daß die Säulenstützer unterhalb des Hochspannungsleiters als Standstützer ausgebildet sind oder andererseits daß die Säulenstützer als Hängeisolatoren oberhalb des Hochspannungsleiters angeordnet sind.

Jeweils zwei Säulenstützer, die gegeneinander um den Winkel 2 α in der Querschnittsebene des Kapselungsrohres gedreht sind, bilden in ihrer Zusammenwirkung eine wirksame Abstützung des Hochspannungsleiters sowohl in vertikaler als auch in horizontaler Richtung. Es können jeweils zwei dieser Säulenstützer als Paar in einem gewissen ersten Abstand in Längsrichtung des Hochspannungsleiters voneinander angeordnet sein, wobei jedes Paar von dem nächsten Paar durch einen größeren, zweiten Abstand getrennt ist. Der erste Abstand kann beispielsweise bis zu einem Fünftel, insbesondere bis zu einem Zehntel des zweiten Abstandes betragen. Auch hierdurch ergibt sich eine Einsparung an der Anzahl der Säulenstützer.

Im folgenden wird die Erfindung anhand eines Ausführungsbeispiels in einer Zeichnung gezeigt und nachfolgend beschrieben.

Dabei zeigt
Figur 1 im Querschnitt die Abstützung eines Hochspannungsleiters durch zwei Säulenstützer,
Figur 2 in einer schematischen Darstellung eine Ansicht in einen Längsschnitt eines Hochspannungs-Rohrgasleiters.

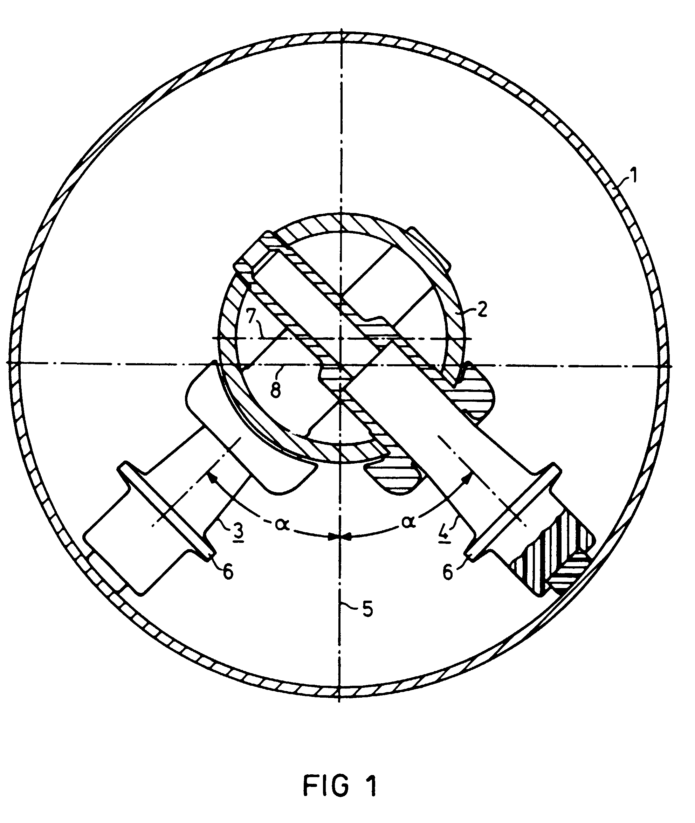

In der Figur 1 ist im Querschnitt das Kapselungsrohr 1 mit dem darin angeordneten Hochspannungsleiter 2 dargestellt. Der Hochspannungsleiter 2 ist durch zwei Säulenstützer 3, 4 gestützt, die jeweils um den Winkel α bzw. -α gegenüber der Vertikalen 5 gedreht sind.

Die Säulenstützer 3, 4 sind in Längsrichtung des Hochspannungsleiters 2 hintereinander angeordnet und bestehen aus einem Isolierstoff, insbesondere einem Kunststoff. Sie sind als Steckstützer ausgebildet und durchsetzen den hohlen Hochspannungsleiter 2.

Die Säulenstützer 3, 4 weisen außerdem jeweils einen Schirm 6 auf, der die elektrische Durchschlagfestigkeit erhöht und Kriechströme verhindert.

Durch die Säulenstützer 3, 4 ist die Mittelachse 7 des Hochspannungsleiters 2 oberhalb der Mittelachse 8 des Kapselungsrohrs 1 fixiert.

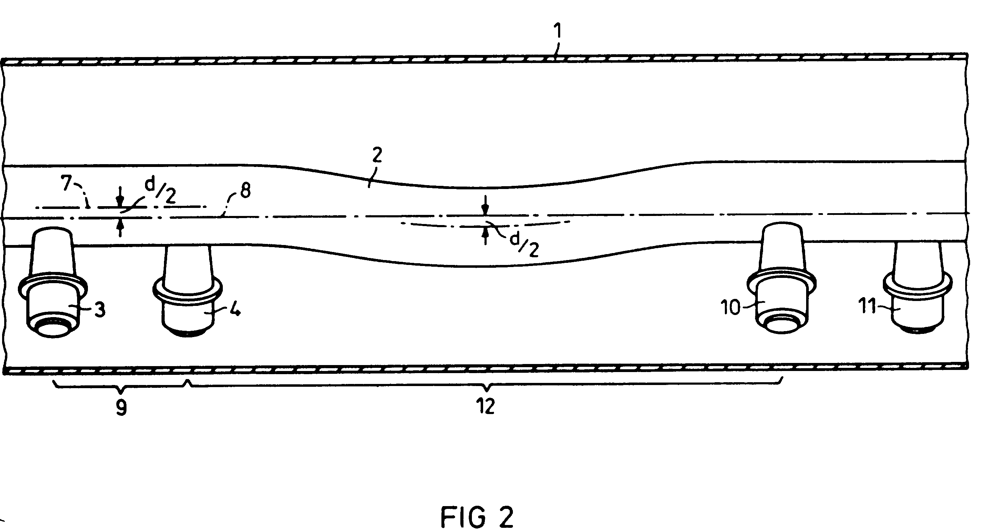

Die Verschiebung der Mittelachse 7 des Hochspannungsleiters gegenüber der Mittelachse 8 des Kapselungsrohres ist auch in der Figur 2 im Bereich der Säulenstützer 3, 4 dargestellt. Dort ist weiterhin ersichtlich, daß die Säulenstützer 3 und 4 in einem relativ geringen ersten Abstand 9 beieinander angeordnet sind und daß weiter Paare von Säulenstützern 10, 11 in einem zweiten Abstand 12 von dem ersten Säulenstützerpaar angeordnet sind, der wesentlich größer ist als der erste Abstand 9.

Zwischen den verschiedenen Säulenstützerpaaren hängt der Hochspannungsleiter 2 in vertikaler Richtung um den Betrag d des maximalen Durchhangs durch, so daß die Mittelachse 7 des Hochspannungsleiters 2 um einen Abstand d/2 unterhalb der Mittelachse 8 des Kapselungsrohres 1 liegt.

Im Bereich der Säulenstützer 3, 4, 10, 11 ist die Mittelachse 7 des Hochspannungsleiters 2 soweit angehoben, daß sie dort um denselben Betrag d/2 oberhalb der Mittelachse 8 des Kapselungsrohres 1 liegt.

Auf diese Weise ist die Abweichung der Mittelachse des Hochspannungsleiters 2 von der Mittelachse 8 des Kapselungsrohres 1 auf der gesamten Länge des Kapselungsrohres 1 auf den Wert d begrenzt.

Es ist auch eine weitere, in den Figuren nicht dargestellte Variante denkbar, bei der die Säulenstützer als Hängeisolatoren oberhalb des Hochspannungsleiters angeordnet sind.

## Patentansprüche

1. Hochspannungs-Rohrgasleiter mit einem Kapselungsrohr (1) und einem in diesem koaxial verlaufenden, mittels Isolierstützern (3,4,10,11) abgestützten Hochspannungsleiter (2), wobei die Mittelachse (7) des Hochspannungsleiters (2) jeweils im Bereich eines Isolierstützers (3,4) oberhalb der Mittelachse (8) des Kapselungsrohres (1) angeordnet ist,
**dadurch gekennzeichnet**, daß
die Mittelachse (7) des Hochspannungsleiters (2) im Bereich eines Isolierstützers (3,4,10,11) jeweils um einen Betrag oberhalb der Mittelachse (8) des Kapselungsrohres (1) angeordnet ist, der etwa der Hälfte des maximalen Durchhanges des Hochspannungsleiters (2) in horizontaler Lage des Hochspannungs-Rohrgasleiters entspricht.

2. Hochspannungs-Rohrgasleiter nach Anspruch 1,
**dadurch gekennzeichnet**, daß
die Isolierstützer (3,4,10,11) als Säulenstützer ausgebildet sind.

3. Hochspannungs-Rohrgasleiter nach Anspruch 1 oder 2,
**dadurch gekennzeichnet**, daß
der Hochspannungsleiter (2) in horizontaler Lage im wesentlichen in vertikaler Richtung abgestützt ist.

4. Hochspannungs-Rohrgasleiter nach einem der Ansprüche 1 bis 3,
**dadurch gekennzeichnet**, daß
der Hochspannungsleiter (2) durch Säulenstützer (3,4,10,11) abgestützt ist, deren Längsachsen in der Querschnittsebene des Kapselungsrohrs (1) abwechselnd um einen Winkel α oder-α gegen die Vertikale (5) gedreht angeordnet sind, wobei der Betrag des Winkels α kleiner als 90° ist.

## Claims

1. A gas-insulated high voltage conductor comprising an encapsulating pipe (1) and a high voltage conductor (2) extending coaxially in said encapsulating pipe and supported by meane of insulators (3, 4, 10, 11), wherein in the region of an insulator (3, 4) the central axis (7) of the high voltage conductor (2) is in each case arranged above the central axis (8) of the encapsulating pipe (1), characterised in that in the region of an insulator (3, 4, 10, 11) the central axis (7) of the high voltage conductor (2) is in each case arranged above the central axis (8) of the encapsulating pipe (1) by an amount which corresponds approximately to half the maximum sag of the high voltage conductor (2) in the horizontal position of the gas-insulated high voltage conductor.

2. A gas-insulated high voltage conductor according to Claim 1, characterised in that the insulators (3, 4, 10, 11) have the form of column insulators.

3. A gas-insulated high voltage conductor according to Claim 1 or 2, characterised in that in the horizontal position the high voltage conductor (2) is substantially supported in the vertical direction.

4. A gas-insulated high voltage conductor according to one of the claims 1 to 3, characterised in that the high voltage conductor (2) is supported by column insulators (3, 4, 10, 11) whose longitudinal axes extend in the cross-sectional plane of the encapsulating pipe (1) rotated alternately by an angle α or -α relative to the vertical plane (5), the amount of the angle a being smaller than 90°.

## Revendications

1. Ligne haute tension à isolation gazeuse comportant un tube de blindage (1) et un conducteur haute tension (2) qui s'étend coaxialement dans celui-ci et est soutenu au moyen de supports isolants (3, 4, 10, 11), l'axe médian (7) du conducteur haute tension (2) étant disposé chaque fois dans la zone d'un support isolant (3, 4) au-dessus de l'axe médian (8) du tube de blindage (1), caractérisée en ce que l'axe médian (7) du conducteur haute tension (2) est, dans la zone d'un support isolant (3, 4, 10, 11), décalé vers le haut par rapport à l'axe médian (8) du tube de blindage (1) d'une valeur qui correspond environ à la moitié de la flèche maximale du conducteur haute tension (2) dans la position horizontale de la ligne haute tension à isolation gazeuse.

2. Ligne haute tension à isolation gazeuse selon la revendication 1, caractérisée en ce que les supports isolants (3, 4, 10, 11) sont réalisés sous forme de colonnes de support.

3. Ligne haute tension à isolation gazeuse selon la revendication 1 ou 2, caractérisée en ce que le conducteur haute tension (2) en position horizontale est soutenu pour l'essentiel dans la direction verticale.

4. Ligne haute tension à isolation gazeuse selon l'une des revendications 1 à 3, caractérisée en ce que le conducteur haute tension (2) est supporté par des colonnes de support (3, 4, 10, 11) dont les axes longitudinaux sont tournés dans le plan de section du tube de blindage (1) alternativement d'un angle α ou -α par rapport à la verticale (5), la valeur de l'angle α étant inférieure à 90°.
